# EUROPÄISCHE PATENTSCHRIFT

(11) **EP 1 566 317 B1**
(45) Veröffentlichungstag und Bekanntmachung des Hinweises auf die Patenterteilung: **20.09.2006**
(21) Anmeldenummer: 05000780.6
(22) Anmeldetag: 15.01.2005
(51) Int. Cl.: B60S 1/38

(54) **Scheibenwischeinheit für ein Kraftfahrzeug**
Wiper unit for a vehicle
Ensemble essuie-glace pour un véhicule

(30) Priorität: 19.02.2004 DE 102004009911
(43) Veröffentlichungstag der Anmeldung: 24.08.2005
(73) Patentinhaber: Kässbohrer Geländefahrzeug AG, 88471 Laupheim (DE)
(72) Erfinder: Hienzsch, Dieter, 82467 Garmisch Partenkirchen (DE)
(74) Vertreter: Patentanwälte Ruff, Wilhelm, Beier, Dauster & Partner

(56) Entgegenhaltungen:
- WO-A-01/38149
- CA-A1- 2 357 337
- DE-A1- 19 723 900
- US-A- 3 427 675
- US-A- 3 574 881

## Beschreibung

Die Erfindung betrifft eine Scheibenwischeinheit für ein Kraftfahrzeug mit einem Wischblattträger, mit einem an dem Wischblattträger gehaltenen Wischblatt, das ein elastisch nachgiebiges Wischelement aufweist, sowie mit einer Heizeinrichtung für das Wischblatt.

Eine Scheibenwischeinheit ist aus der DE 33 23 004 C2 bekannt. Die bekannte Scheibenwischeinheit weist einen Wischerarm auf, der mit einem etwa mittig angelenkten Wischerblatt versehen ist. In dem Wischerarm ist ein Spülmediumkanal integriert. Parallel zu dem Spülmediumkanal laufen mehreren Heizmediumkanäle, die wärmeleitend mit dem Spülmediumkanal in Verbindung stehen. Dadurch wird verhindert, dass die Spülflüssigkeit bei niedrigen Umgebungstemperaturen einfriert.

Eine weitere gattungsgemässe Scheibenwischeinheit ist aus dem Dokument DE-A-19723900 bekannt.

Aus der DE 2 164 932 ist eine Scheibenwischeinheit bekannt, bei der ein Wischgummiprofil des Wischblattes mit einem längserstreckten, elektrischen Heizleiter versehen ist. Hierdurch soll vermieden werden, dass das Wischgummiprofil bei Schnee und Eis zufriert und keine elastische Wischtätigkeit auf der Scheibe mehr durchführen kann.

Aufgabe der Erfindung ist es, eine Scheibenwischeinheit der eingangs genannten Art zu schaffen, die zuverlässig auch bei stark frostigen Umwelteinflüssen eine einwandfreie Scheibenwischfunktion aufrechterhält.

Diese Aufgabe wird durch die Merkmale des kennzeichnenden Teils des unabhängigen Anspruchs 1 gelöst. Erfindungsgemäß weißt der Wischblattträger wenigstens einen zumindest abschnittsweise wärmeleitenden Wandungsabschnitt auf, der das Wischelement und/oder das Wischblatt zumindest abschnittsweise flankiert, und dass wenigstens eine aus einem wärmeleitenden Material bestehende Heizmediumleitung längs des Wandungsabschnittes verlegt ist. Durch die erfindungsgemäße Lösung wird das elastisch nachgiebige Wischelement beheizt und somit in einem elastischen, gleichbleibenden Wischfunktionszustand gehalten. Durch die erfindungsgemäße Lösung steht der wenigstens eine Wandungsabschnitt mit dem Wischblatt und/oder dem Wischelement wärmeleitend oder wärmeübertragend in Wirkverbindung und hält somit insbesondere das Wischelement auf einer Temperatur, die das Ansetzen von Schnee oder Eis verhindert und die Elastizität des Materials des Wischelementes aufrechterhält. Erfindungsgemäß wird die Heizmediumleitung durch eine Kühlmittelleitung eines Kühlmittelkreislaufes eines Antriebsmotors des Kraftfahrzeugs gebildet. Dadurch, dass die Heizmediumleitung längs des Wandungsabschnittes des Wischblattträgers verlegt ist, wirkt der Wischblattträger als Wärmetauscher bzw. Wärmeübertrager, der zum Einen aufgrund des durch die Reibungswärme des Antriebsmotors aufgeheizten Kühlmittels eine Beheizung des Wischelementes bewirkt und zum Anderen eine Abkühlung des aufgeheizten Kühlmittels erzielt. Falls der Wandungsabschnitt wärmeleitend mit dem Wischelement und/oder dem Wischblatt in Verbindung ist, steht er direkt mit dem Wischelement oder dem Wischblatt in Berührung. Bei einer wärmeübertragenden Wirkverbindung zwischen dem Wandungsabschnitt und dem Wischelement und/oder dem Wischblatt ist das Wischelement und/oder das Wischblatt zu dem Wandungsabschnitt zumindest geringfügig beabstandet und die Aufheizung erfolgt durch die Wärmeabstrahlung des mittels des Kühlmittels aufgeheizten Wandungsabschnittes. Die erfindungsgemäße Lösung schafft somit eine indirekte Beheizung des Wischelementes durch Wärmestrahlung oder Wärmeleitung. Gleichzeitig dient der Wandungsabschnitt als Wärmetauscher zur Abkühlung des aufgeheizten Kühlmittels und bildet so einen Funktionsbereich für den Kühlmittelkreislauf des Antriebsmotors. Zusätzlich vorzusehende Wärmetauscher des Kühlmittelkreislaufes können entsprechend schwächer ausgelegt werden, wodurch eine Energieeinsparung erzielt wird.

In Ausgestaltung der Erfindung weist der Wischblattträger als Wandungsabschnitte zwei zueinander zumindest abschnittsweise parallele Wandflächen auf, die das Wischblatt und/oder das Wischelement über seine Länge auf gegenüberliegenden Seiten flankieren. Dadurch wird über die gesamte Länge des Wischelementes eine gleichmäßige Aufheizbarkeit erzielt.

Erfindungsgemäß weisen die Wandflächen rinnen- oder sickenartige Vertiefungen auf, in die die wenigstens eine Kühlmittelleitung eingebettet ist. Vorzugsweise ist die Kühlmittelleitung durch eine formstabile Rohrleitung gebildet. Die Einbettung der Rohrleitung in die rinnen- oder sickenartigen Vertiefungen schafft eine gute Wärmeleitverbindung zwischen der Rohrleitung und den Wandflächen, wodurch eine gleichmäßige und großflächige Aufheizung der Wandflächen erzielbar ist.

In weiterer Ausgestaltung der Erfindung ist die Rohrleitung zumindest abschnittsweise stoffschlüssig in den Vertiefungen der Wandflächen gehalten. Vorzugsweise ist die Rohrleitung zumindest abschnittsweise mit den Vertiefungen der Wandflächen verlötet. Hierdurch wird die Wärmeleitverbindung weiter verbessert, da das Lot einen guten Wärmeleiter abgibt. Sowohl die Wandflächen, d.h. die Wandungsabschnitte, als auch die Rohrleitung sind vorzugsweise aus Metall hergestellt.

In weiterer Ausgestaltung der Erfindung sind die Wandflächen durch wenigstens einen Verbindungssteg miteinander verbunden. Vorzugsweise erstreckt sich der Verbindungssteg über eine gesamte Seitenlänge jeder Wandfläche, so dass die Wandflächen und der Verbindungssteg ein formstabiles, kassettenartiges Gehäuse bilden. Das elastische Wischelement des Wischblattes ragt vorzugsweise zu einer offenen Seite des Gehäuses nach außen ab. Das Wischblatt und teilweise das elastische Wischelement werden somit von dem Gehäuse umschlossen, wodurch eine gute Wärmeübertragung oder Wärmeleitung erzielt wird. Dadurch, dass auch die Rohrleitung innerhalb des Gehäuses verläuft, bildet das Gehäuse eine Isolierung für die Rohrleitung, wodurch die Wärme der Rohrleitung verbessert zu dem Wischblatt und dem Wischelement gebracht werden kann.

In weiterer Ausgestaltung der Erfindung weist das Gehäuse eine Aufnahme für die Befestigung des Wischerarmes auf. In weiterer Ausgestaltung ist die Rohrleitung ringförmig in dem Gehäuse verlegt und weist zwei Rohranschlüsse auf, die vorzugsweise in der Nähe der Aufnahme aus dem Gehäuse herausragen. Diese Ausgestaltung ist insbesondere vorteilhaft, falls der Wischerarm an der Aufnahme mit dem Gehäuse gelenkig verbunden ist. Durch die Mündung der Rohranschlüsse im Bereich der Aufnahme können an die Rohranschlüsse flexible Kühlmittelleitungen angeschlossen werden, die längs des Wischerarmes bis zu dem Gelenkpunkt verlegt sind, ohne dass die flexiblen Kühlmittelleitungen oder die Rohranschlüsse bei Schwenkbewegungen des Wischerarmes aufgrund von Wischbewegungen größere Längenänderungen erfahren. Ein Lösen der flexiblen Kühlmittelleitungen oder eine Beschädigung der Rohranschlüsse wird hierdurch vermieden. Die Rohranschlüsse befinden sich vorzugsweise in unmittelbarer Nähe der Schwenkachse des Wischblattträgers im Bereich der Aufnahme, so dass Schwenkbewegungen des Wischblattträgers relativ zu dem Wischerarm keinen großen Einfluss auf die flexiblen Kühlmittelleitungen oder die Rohranschlüsse haben.

Weitere Vorteile und Merkmale der Erfindung ergeben sich aus den Ansprüchen sowie aus der nachfolgenden Beschreibung eines bevorzugten Ausführungsbeispiels der Erfindung, das anhand der Zeichnungen dargestellt ist.
- Fig. 1: zeigt in einer Seitenansicht einen Wischblattträger für eine erfindungsgemäße Scheibenwischeinheit,
- Fig. 2: einen Querschnitt durch den Wischblattträger nach Fig. 1 entlang der Schnittlinie II-II in Fig. 1,
- Fig. 3: eine in dem Wischblattträger nach Fig. 1 verlegte Rohrleitung in einer Draufsicht,
- Fig. 4: die Rohrleitung nach Fig. 3 in einer Seitenansicht, und
- Fig. 5: schematisch in einer Seitenansicht die aus Wischblattträger, Wischblatt, Wischgummi und Heizrohrleitung bestehende Scheibenwischeinheit mit den Komponenten gemäß den Figuren 1 bis 4.

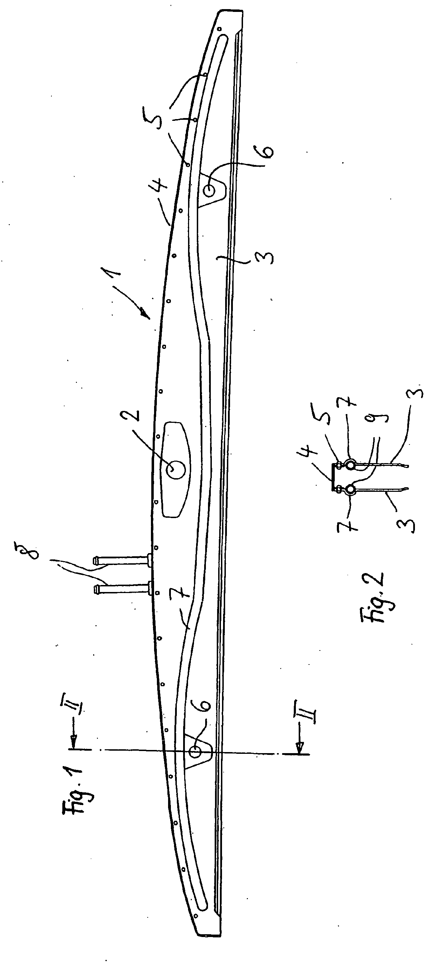

Eine Scheibenwischeinheit, wie sie nachfolgend anhand der Figuren 1 bis 5 näher beschrieben wird, ist besonders bevorzugt für den Einsatz im Bereich einer Fahrerkabine eines Kettenfahrzeugs geeignet, das zur Schneepistenpflege und -gestaltung eingesetzt wird. Die Scheibenwischeinheit hat insbesondere dort Vorteile, wo eine einwandfreie Scheibenwischfunktion auch bei extremen Wetterbedingungen noch gewährleistet sein muss. Ein weiterer, bevorzugter Einsatzzweck ist für Kettenfahrzeuge vorgesehen, die als Forschungs- oder Einsatzfahrzeuge in Schnee- und Eisgeländen, insbesondere an den Erdpolen, eingesetzt werden.

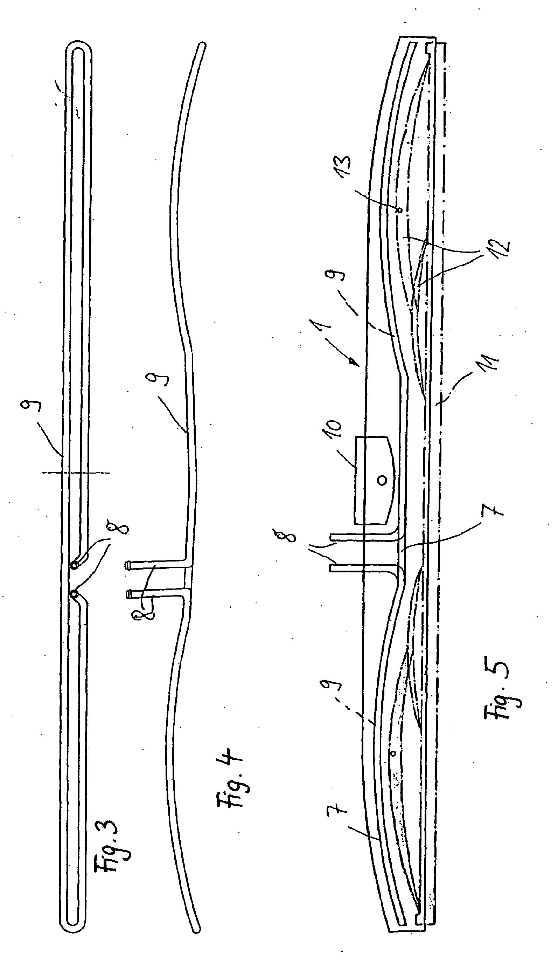

Die Scheibenwischeinheit weist einen Wischblattträger 1 auf, in dem gemäß Fig. 5 ein Wischblatt 12 gehalten ist, das ein elastisches Wischelement in Form eines Wischgummiprofiles 11 trägt. Der Wischblattträger 1 ist, wie anhand der Figuren 1 und 2 erkennbar ist, als kassettenartiges Gehäuse gestaltet. Der Wischblattträger 1 weist zwei zueinander zumindest weitgehend parallele Seitenwandflächen 3 auf, die an ihrer Unterseite einen geradlinigen Rand besitzen und in ihrem oberen Randbereich kreisbogenartig gekrümmt sind. Die beiden Seitenwandflächen 3 sind spiegelsymmetrisch zueinander gestaltet. Die beiden Seitenwandflächen 3 werden durch einen Verbindungssteg 4 in gleichmäßigem Abstand zueinander gehalten, der sich an dem oberen Randbereich der Seitenwandflächen 3 quer zu diesem erstreckt und diese miteinander verbindet. Der Verbindungssteg 4 ist als entsprechend dem oberen Randbereich der Seitenwandflächen 3 gekrümmtes Profilbauteil gestaltet, das durch mehrere, gleichmäßig über die Länge der Seitenwandflächen 3 verteilte Nietverbindungen 5 mit den Seitenwandflächen fest verbunden ist. Anstelle von Nietverbindungen können auch andere stoff- oder formschlüssige Verbindungsmittel vorgesehen sein. Der Verbindungssteg 4 weist an seinen gegenüberliegenden Stirnenden und damit auch an den gegenüberliegenden Stirnenden des Wischblattträgers 1 jeweils eine nicht näher bezeichnete Abschlussblende auf, die die Stirnbereiche des kassettenartigen Gehäuses verschließt. Das Gehäuse ist zu der dem Verbindungssteg 4 gegenüberliegenden Unterseite hin offen, wie anhand der Fig. 2 erkennbar ist.

Der gehäuseartige Wischblattträger 1 ist mit einer Aufnahme 2 versehen, die etwa mittig im Wischblattträger 1 angeordnet ist. Im Bereich dieser Aufnahme 2 ist eine Halterung 10 positionierbar, die einem nicht näher dargestellten Wischerarm zugeordnet ist und dazu dient, den Wischblattträger 1 an dem Wischerarm vorzugsweise lösbar zu befestigen. Der Wischerarm ist im Bereich einer Frontscheibe der Fahrerkabine schwenkbeweglich gelagert, um die entsprechenden Wischbewegungen durchführen zu können. Je nach Ausführung der gesamten Scheibenwischanlage ist eine weitere Scheibenwischeinheit analog der Scheibenwischeinheit gemäß den Figuren 1 bis 5 vorgesehen, die seitlich versetzt auf Höhe eines Beifahrerbereiches an der Frontscheibe positionierbar ist.

Der Wischblattträger 1 weist zudem zwei Haltelaschen 6 auf, um das Wischblatt 12 in dem Wischblattträger 1 aufnehmen und dort befestigen zu können. Nicht näher dargestellte Befestigungsmittel 13 sichern das Wischblatt 12 an den Haltelaschen 6. Das Wischblatt 12 trägt das Wischgummiprofil 11, das sich über nahezu die gesamte Länge des Wischblattträgers 1 erstreckt, wie anhand der Fig. 5 erkennbar ist. Das Wischgummiprofil 11 weist an seiner Unterseite eine nicht näher bezeichnete Wischlippe auf, die im Funktionszustand auf der Frontscheibe der Fahrerkabine aufliegt. Das Wischblatt 12 weist mehrere nachgiebige Tragabschnitte auf, um das Wischgummiprofil 11 elastisch nachgiebig halten zu können. Das Wischgummiprofil 11 weist eine geringere Breite auf als der Abstand der unteren Randbereiche der Seitenwandflächen 3 zueinander, so dass das Wischgummiprofil 11 relativ zu dem Wischblattträger 1 beweglich angeordnet ist, um sich den unterschiedlichen Krümmungen der Frontscheibe bei einer entsprechenden Wischbewegung anpassen zu können. Zudem ragt das Wischgummiprofil 11 über die unteren Randbereiche der Seitenwandflächen 3 nach unten hinaus, um das entsprechende Umlegen der Wischlippe bei den hin- und hergehenden Bewegungen des Wischblattträgers 1 während eines Scheibenwischvorganges zu ermöglichen. Der Wischblattträger 1 ist aus wärmeleitendem Material hergestellt. Hierzu sind sowohl die Seitenwandflächen 3 als auch der Verbindungssteg 4 aus Metallblech gestaltet. Die beiden Seitenwandflächen 3 weisen über ihre nahezu gesamte Länge eine durchgängige, sicken- oder rinnenartige Einprägung 7 auf, die eine Vertiefung in der jeweiligen Seitenwandfläche 3 bildet. Wie anhand der Fig. 2 erkennbar ist, sind die Einprägungen so vorgenommen, dass die entstehenden Sicken nach außen ausgewölbt sind. In die entstandenen Vertiefungen ist von innen her eine ringförmige Rohrleitung 9 eingebettet, die ungefähr parallel zum Verlauf einer oberen Kontur des Wischblattes 12 gekrümmt ist. Die Rohrleitung 9 weist zwei einander gegenüberliegende Rohrleitungsbereiche auf, die jeweils über die gesamte Länge der Sicken 7 flächig in diese eingebettet sind und an den Endbereichen der Sicken 7 entsprechend gekrümmt und zu der ringförmigen Leitung mit dem gegenüberliegenden Rohrabschnitt verbunden sind. Die Rohrleitung 9 weist zwei Rohranschlüsse 8 auf, die orthogonal zu den Rohrleitungsabschnitten abgewinkelt und parallel zueinander aus dem kassettenartigen Gehäuse des Wischblattträgers 1 herausgeführt sind. Hierzu weist der Verbindungssteg 4 in nicht näher dargestellter Weise entsprechende Durchtrittsöffnungen auf. Beim dargestellten Ausführungsbeispiel ist die Rohrleitung 9 stoffschlüssig, insbesondere durch Verlötung, mit den Innenflächen der Sicken 7 verbunden, um so eine feste Verbindung mit den Seitenwandflächen 3 zu erzielen. Es ist aber auch möglich, die Rohrleitung 9 lediglich in die Sicken 7 einzubetten und die Rohrleitung 9 nur im Bereich der Rohranschlüsse 8 fest mit dem Wischblattträger 1 zu verbinden. Schließlich ist es auch möglich, die Rohrleitung 9 mittels mehrerer, punktartiger Verbindungsbereiche an die Innenflächen der Seitenwandflächen 3 bzw. der Sicken 7 anzubinden. In allen Fällen muss gewährleistet sein, dass die Rohrleitung 9 dauerhaft und fest mit dem Wischblattträger 1 verbunden ist. Zur Befestigung der Rohrleitung 9 in dem gehäuseförmigen Wischblattträger 1 können auch Haltemittel sowie lösbare oder unlösbare mechanische Befestigungsmittel wie Schraub- oder Nietverbindungen oder ähnliches vorgesehen sein. Die Rohrleitung 9 ist aus Metall, vorzugsweise aus einer Aluminiumlegierung hergestellt und durch die flächige Einbettung in die Sicken 7 wärmeleitend mit den Seitenwandflächen verbunden.

Sobald nun im betriebsfertigen Zustand die Scheibenwischeinheit an einem entsprechenden Wischerarm im Bereich einer Frontscheibe befestigt ist und die Rohranschlüsse mit flexiblen oder formstabilen Leitungsanschlüssen eines Kühlmittelkreislaufes eines Antriebsmotors des Kettenfahrzeugs verbunden sind, dient das durch die Abwärme des Antriebsmotors aufgeheizte Kühlmittel dazu, die Rohrleitung 9 und damit auch die Seitenwandflächen 3 und den Wischblattträger 1 aufzuheizen, wodurch auch das Wischblatt 12 und das Wischgummiprofil 11 erwärmt werden. Gleichzeitig dient der aus wärmeleitendem Material bestehende Wischblattträger 1 zumindest in geringem Maße als Wärmetauscher für die Kühlmittelflüssigkeit des Kühlmittelkreislaufes, so dass wenigstens ein in den Kühlmittelkreislauf eingebundener Wärmetauscher bezüglich seiner Wärmetauschleistung reduziert ausgelegt werden kann.

## Patentansprüche

1. Scheibenwischeinheit für ein Kraftfahrzeug mit einem Wischblattträger (1), mit einem an dem Wischblattträger (1) gehaltenen Wischblatt (12), das ein elastisch nachgiebiges Wischelement (11) aufweist, sowie mit einer Heizeinrichtung für das Wischblatt (12), wobei der Wischblattträger (1) wenigstens einen zumindest abschnittsweise wärmeleitenden Wandungsabschnitt (3) aufweist, der das Wischelement (11) und/oder das Wischblatt (12) zumindest abschnittsweise flankiert, und wobei wenigstens eine aus einem wärmeleitenden Material bestehende Heizmediumleitung (9) längs des Wandungsabschnittes (3) verlegt ist, wobei als Heizmediumleitung eine Kühlmittelleitung (9) eines Kühlmittelkreislaufes eines Antriebsmotors des Kraftfahrzeugs vorgesehen ist, und wobei der Wischblattträger (1) als Wandungsabschnitte zwei zueinander zumindest ungefähr parallele Wandflächen (3) aufweist, die das Wischblatt (12) über seine Länge auf gegenüberliegenden Seiten flankieren, **dadurch gekennzeichnet, dass** die Wandflächen (3) rinnen- oder sickenartige Vertiefungen (7) aufweisen, in die die wenigstens eine Kühlmittelleitung (9) eingebettet ist.

2. Scheibenwischeinheit nach Anspruch 1, **dadurch gekennzeichnet, dass** die Kühlmittelleitung durch eine formstabile Rohrleitung (9) gebildet ist, und dass die Rohrleitung (9) zumindest abschnittsweise stoffschlüssig in den Vertiefungen (7) der Wandflächen (3) gehalten ist.

3. Scheibenwischeinheit nach Anspruch 1, **dadurch gekennzeichnet, dass** die Vertiefungen (7) sich wenigstens über die Länge des Wischblattes (12) längs der Wandflächen (3) erstrecken.

4. Scheibenwischeinheit nach Anspruch 1, **dadurch gekennzeichnet, dass** die Wandflächen (3) durch wenigstens einen Verbindungssteg (4) miteinander verbunden sind.

5. Scheibenwischeinheit nach Anspruch 4, **dadurch gekennzeichnet, dass** die Wandflächen (3) und der Verbindungssteg (4) durch eine Metallblechkonstruktion gebildet sind.

6. Scheibenwischeinheit nach einem der vorhergehenden Ansprüche, **dadurch gekennzeichnet, dass** die Wandflächen (3) und der wenigstens eine Verbindungssteg (4) für das Wischblatt (12) ein kassettenartiges Gehäuse bilden, wobei das elastische Wischelement (11) des Wischblattes (12) zu einer offenen Seite des Gehäuses nach außen abragt.

7. Scheibenwischeinheit nach Anspruch 6, **dadurch gekennzeichnet, dass** das Gehäuse eine Aufnahme (2) für die Befestigung eines Wischerarmes aufweist.

8. Scheibenwischeinheit nach wenigstens einem der vorhergehenden Ansprüche, **dadurch gekennzeichnet, dass** die Kühlmittelleitung (9) ringförmig in dem Gehäuse verlegt ist und zwei Rohranschlüsse (8) aufweist, die vorzugsweise in der Nähe der Aufnahme (2) aus dem Gehäuse herausragen.

## Claims

1. Windscreen wiper unit for a motor vehicle with a wiper blade carrier (1) with a wiper blade (12) held on the wiper blade carrier (1) which features an elastically flexible wiper blade element (11) and a heating device for the wiper blade (12), wherein the wiper blade carrier (1) features at least a section-wise heat-conducting wall section (3) which supports the wiper element (11) and/or the wiper blade (12) at least section-wise, and wherein at least a heat distributing medium piping (9) designed of a heat-conducting material is laid along the wall section (3), wherein a coolant piping (9) is provided as a heat distributing medium piping of an engine coolant circuit of the motor vehicle, and wherein the wiper blade carrier (1) features at least two wall surfaces (3) that are approximately parallel, as a wall section, which supports the wiper blade (12) on opposite sides along its length, **characterized in that** the wall surfaces (3) feature gutter-type or groove-type depressions (7), in which at least a coolant piping (9) is embedded.

2. Windscreen wiper unit according to Claim 1, **characterized in that** the coolant piping is formed by means of a shape-stable piping (9), and that the piping (9) is held at least section-wise form-closed in the depressions (7) of the wall surfaces (3).

3. Windscreen wiper unit according to Claim 1 **characterized in that** the depressions (7) stretch at least along the length of the wiper blade (12) along the wall surfaces (3).

4. Windscreen wiper unit according to Claim 1 **characterized in that** the wall surfaces (3) are connected with each other at least by means of a connection web (4).

5. Windscreen wiper unit according to Claim 4 **characterized in that** the wall surfaces (3) and the connection web (4) are formed by means of a sheet metal structure.

6. Windscreen wiper unit according to one of the preceding claims, **characterized in that** the wall surfaces (3) and at least a connection web (4) for the wiper blade (12) form a cassette-shaped housing, wherein the elastic wiper element (11) of the wiper blade (12) projects towards an open side of the housing.

7. Windscreen wiper unit according to Claim 6 **characterized in that** the housing features a socket (2) for fixing a wiper arm.

8. Windscreen wiper unit according to one of the preceding claims, **characterized in that** the coolant piping (9) is laid ring-shaped inside the housing and features two piping connections (8), which preferably protrude out of the housing in the area near the socket (2).

## Revendications

1. Ensemble d'essuie-glace destiné à un véhicule à moteur comportant un porte-balai (1) avec un balai d'essuie-glace (12) maintenu sur le porte-balai (1) qui comprend un élément d'essuie-glace élastique (11) ainsi qu'un dispositif de chauffage pour le balai d'essuie-glace (12), le porte-balai (1) présentant au moins une section de paroi (3) thermoconductrice au moins par sections qui flanque l'élément d'essuie-glace (11) et/ou le balai d'essuie-glace (12) au moins par sections et dans lequel au moins une conduite de liquide de chauffage (9) réalisée dans un matériau thermoconducteur est posée le long de la section de paroi (3), une conduite de réfrigérant (9) d'un circuit de réfrigérant d'un moteur d'entraînement du véhicule à moteur étant prévue en tant que conduite du liquide de chauffage et le porte-balai (1) comportant en tant que sections de paroi deux parois (3) au moins à peu près parallèles l'une à l'autre qui flanquent le balai d'essuie-glace (12) sur toute sa longueur au niveau des côtés opposés, **caractérisé en ce que** les surfaces de paroi (3) sont munies de creux en forme de rainure ou de rigole dans lesquels est insérée l'au moins une conduite de réfrigérant (9).

2. Ensemble d'essuie-glace selon la revendication 1, **caractérisé en ce que** la conduite de réfrigérant est formée par une tuyauterie indéformable (9), et que la tuyauterie (9) est maintenue par liaison de matière au moins par sections dans les creux (7) aménagés dans les parois (3).

3. Ensemble d'essuie-glace selon la revendication 1, **caractérisé en ce que** les creux (7) s'étendent le long des parois (3) au moins sur la longueur du balai d'essuie-glace (12).

4. Ensemble d'essuie-glace selon la revendication 1, **caractérisé en ce que** les parois (3) sont reliées entre elles au moins par une barrette de jonction (4).

5. Ensemble d'essuie-glace selon la revendication 4, **caractérisé en ce que** les parois (3) et la barrette de jonction (4) sont constituées par une construction en tôle métallique.

6. Ensemble d'essuie-glace selon l'une quelconque des revendications précédentes, **caractérisé en ce que** les parois (3) et l'au moins une barrette de jonction (4) forment un boîtier en forme de cassette pour le balai d'essuie-glace (12), l'élément d'essuie-glace élastique (11) du balai d'essuie-glace (12) dépasse vers l'extérieur au niveau d'un côté ouvert du boîtier.

7. Ensemble d'essuie-glace selon la revendication 6, **caractérisé en ce que** le boîtier comporte un logement (2) prévu la fixation d'un bras d'essuie-glace.

8. Ensemble d'essuie-glace selon au moins l'une quelconque des revendications précédentes, **caractérisé en ce que** la conduite de réfrigérant est posée tel un anneau à l'intérieur du boîtier et munie de deux raccords de tuyau (8) qui dépassent du boîtier, de préférence, à proximité du logement (2).
